# EUROPÄISCHE PATENTSCHRIFT

(11) **EP 0 857 623 B1**
(45) Veröffentlichungstag und Bekanntmachung des Hinweises auf die Patenterteilung: **02.11.2000**
(21) Anmeldenummer: 98100498.9
(22) Anmeldetag: 14.01.1998
(51) Int. Cl.: B60R 21/20

(54) **Airbagvorrichtung, welche in einer Instrumententafel unter einer Klappe auf der Beifahrerseite eines Kraftfahrzeugs eingebaut ist**
Airbag device, which is installed in a dashboard under a cover on the passenger side of a vehicle
Dispositif de coussin gonflable, qui est installé dans un tableau de bord sous un couvercle du côté passager d'un véhicle

(30) Priorität: 07.02.1997 DE 19704684
(43) Veröffentlichungstag der Anmeldung: 12.08.1998
(73) Patentinhaber: Johnson Controls Interiors GmbH & Co. KG, 42285 Wuppertal (DE)
(72) Erfinder: Harnisch, Hartmut, 47929 Grefrath (DE); Specht, Martin, 82340 Feldafing (DE)
(74) Vertreter: Zapf, Christoph, Dipl.-Ing.

(56) Entgegenhaltungen:
- DE-A- 3 937 377
- DE-A- 4 421 820
- FR-A- 2 151 938
- US-A- 3 810 653

## Beschreibung

Die Erfindung betrifft eine Airbagvorrichtung nach dem Oberbegriff des Patentanspruches 1.

Airbagvorrichtungen, welche in einer Instrumententafel unter einer Klappe bzw. einem Deckel auf der Beifahrerseite eines Kraftfahrzeugs eingebaut sind, besitzen eine Gasquelle für ein Füllgas und ein Gaskissen, welches sich beim Füllen mit dem Füllgas in den Fahrzeuginnenraum entfaltet. Gasquelle und Gaskissen sind nahe beieinander gegebenenfalls innerhalb eines Moduls angeordnet. Beim Entfalten wird das Gaskissen durch eine Instrumententafelöffnung gedrückt, die im Ruhezustand von der Klappe abgedeckt ist. Die aus der Gasquelle und dem Gaskissen bestehende Baueinheit, welche hinter der Instrumententafel in aller Regel oberhalb des Handschuhfaches angeordnet ist, hat einen relativ großen Platzbedarf, durch welchen der für das Handschuhfach zur Verfügung stehende Raum erheblich reduziert wird. Außerdem bereitet es Schwierigkeiten, beim Entfalten auftretende Druck- und/oder Zugkräfte, die vom sich entfaltenden Gaskissen ausgehen, im Bereich der Instrumententafel sicher aufzunehmen. Eine Airbagvorrichtung gemäß dem Oberbegriff des Anspruchs 1 ist z.B. aus FR-A-2 151 938 bekannt.

Aufgabe der Erfindung ist es, eine Airbagvorrichtung der eingangs genannten Art zu schaffen, bei welcher der hinter der Instrumententafel im Kraftfahrzeug zur Verfügung stehende Raum bei der Unterbringung der Gasquelle, insbesondere des Gasgenerators, mit möglichst wenig Beeinträchtigung des Handschuhfachraumes ausgenutzt wird.

Diese Aufgabe wird erfindungsgemäß durch die Merkmale des Patentanspruches 1 gelöst.

Bei der Erfindung sind das Gaskissen und der Gasgenerator an getrennten Stellen im Fahrzeug befestigt und verankert. Die Verbindung zwischen Gasgenerator und Gaskissen erfolgt über eine Gasführung für das Füllgas. Die Gasführung kann als flexible toleranzüberbrückende Verbindung zwischen dem Gasgenerator und dem Gaskissen ausgebildet sein. Es ist jedoch auch möglich, die Gasführung teilweise oder ganz starr auszubilden und toleranzüberbrückende Mittel zwischen Gasgenerator und Gasführung und/oder Gaskissenbefestigung und Gasführung vorzusehen.

Ferner kann der Gasgenerator an der zwischen den beiden A-Säulen des Fahrzeugs verlaufenden Querstrebe (Querstrebe AA) oder einem anderen am Fahrzeugaufbau abgestützten bzw. befestigten Bauteil, z.B. der Spritzwand, befestigt sein. Hierzu kann die Querstrebe in ihrem Profil so ausgebildet sein, daß eine formschlüssige Verbindung zwischen dem Gasgenerator bzw. einer Gasgeneratorbefestigung und der Querstrebe hergestellt wird. Die Verbindung zwischen Querstrebe und Gasgenerator kann durch eine fest mit der Querstrebe verbundene Halterung für den Gasgenerator durch eine Schraubverbindung oder durch andere geeignete Mittel erfolgen. In bevorzugter Weise befindet sich der Gasgenerator an der Oberseite der Querstrebe, so daß der darunter liegende Raum für das Handschuhfach nicht beengt wird.

Die durch die Gasführung gebildete Verbindung zwischen Gaskissen und Gasgenerator kann lösbar sein. Auf diese Weise ist der Austausch des Gasgenerators vereinfacht, da nach gelöster Gasführung der Befestigungsort des Gasgenerators einfacher zugänglich ist für einen Austausch in einem bestimmten Wartungsturnus. Bei dieser Anordnung genügt es, nur den Gasgenerator auszutauschen und nicht wie bisher das gesamte Modul mit dem Gaskissen.

Das Gaskissen befindet sich in gefaltetem Zustand unmittelbar unter der Klappe, welche die Instrumententafelöffnung verschließt, durch welche das Gaskissen beim Entfalten nach Öffnen der Klappe austritt. Das Gaskissen, welches bevorzugt in flach gefaltetem Zustand (doppelte Zick-Zack-Form) angeordnet ist, befindet sich in einem unmittelbar unter der Klappe liegenden Aufnahmefach, welches von einer unter der Instrumententafel angeordneten Verstärkungshalbschale (DE 44 21 820, EP 06 88 700) gebildet wird. In dem Aufnahmefach ist formschlüssig eine Verstärkungswanne abgestützt, welche das gefaltete Gaskissen zumindest teilweise seitlich und unten umfaßt. Die Verstärkungswanne ist im Aufnahmefach in der Weise abgestützt, daß beim Entfalten des Gaskissens auftretende Druckkräfte und Zugkräfte aufgenommen werden und von der Verstärkungswanne aus über die Verstärkungshalbschale und die Gasführung in den Fahrzeugaufbau an der Querstrebe AA eingeleitet werden. Das Gaskissen ist mit der Verstärkungswanne gasdicht verbunden. Ferner ist die Gasführung mit der Verstärkungswanne gasdicht verbunden. Es ist jedoch auch möglich, daß die Gasführung gasdicht mit dem Gaskissen verbunden ist. Die gasdichte Verbindung der Gasführung mit der Verstärkungswanne oder mit dem Gaskissen liegt innerhalb der ringförmig ausgebildeten Verbindung zwischen Gaskissen und Verstärkungswanne.

Zur Abstützung der Verstärkungswanne kann an der offenen Unterseite des Aufnahmefachs eine Abstützung für die Verstärkungswanne vorgesehen sein. Zusätzlich kann die Verstärkungswanne noch an der Oberseite des als Verstärkungshalbschale ausgebildeten Aufnahmefachs abgestützt sein. Hierdurch werden vor allem beim Entfaltungsvorgang auftretende Druckkräfte aufgenommen und über die Verstärkungshalbschale am Fahrzeugaufbau abgestützt. Durch die Erfindung erreicht man bei unterschiedlichen Fahrzeugtypen eine raumsparende Positionierung und Montage des Gasgenerators in Verbindung mit einem Gaskissen, das in einem von der Instrumententafel und der Verstärkungshalbschale gebildeten Aufnahmefach verbundintegriert ist. Das Gaskissen ist in gefaltetem Zustand unmittelbar unter der die Durchtrittsöffnung verschließenden Klappe in der Instrumententafel in einem Aufnahmefach angeordnet, das einstückig an die Verstärkungshalbschale angeformt ist.

Anhand der Figuren wird an Ausführungsbeispielen die Erfindung noch erläutert. Es zeigt:
- Fig. 1:: in schnittbildlicher Darstellung ein erstes Ausführungsbeispiel;
- Fig. 2:: in schnittbildlicher Darstellung ein zweites Ausführungsbeispiel;
- Fig. 3:: in teilweise perspektivischer Ansicht ein drittes Ausführungsbeispiel;
- Fig. 4:: in teilweise perspektivischer Ansicht ein viertes Ausführungsbeispiel;
- Fig. 5:: in teilweise perspektivischer Ansicht ein fünftes Ausführungsbeispiel; und
- Fig. 6:: in teilweise perspektivischer Ansicht ein sechstes Ausführungsbeispiel.

In den dargestellten Ausführungsbeispielen sind ein Gasgenerator und ein Gaskissen an voneinander getrennten Stellen im Fahrzeug befestigt. Das Gaskissen 2 ist unmittelbar unter einer Klappe 4 einer Instrumententafel 9 angeordnet. Die Instrumententafel 9 ist in bekannter Weise ausgebildet und kann aus einem gegebenenfalls mit einer Folie kaschierten Träger bestehen. Im Träger wird eine Öffnung gebildet, die von der Klappe 4 mit einem Scharnier 12 im normalen Zustand, der in den Figuren dargestellt ist, geschlossen ist. Im Falle eines Deckels ist dieser mit einem Fangband mit der Instrumententafel verbunden. Unter der Instrumententafel 9 befindet sich eine Verstärkungshalbschale 8. Einstückig mit dieser Verstärkungshalbschale ist ein Aufnahmefach 6 für das Gaskissen 2 gebildet. Das Aufnahmefach 6 kann auch als Schußkanal zur Führung des sich entfaltenden Airbags beim Füllen dienen. Die Instrumententafel und die Verstärkungshalbschale können beispielsweise durch Verkleben miteinander zu einem Verbund verbunden sein (EP 06 88 700, DE 44 21 820).

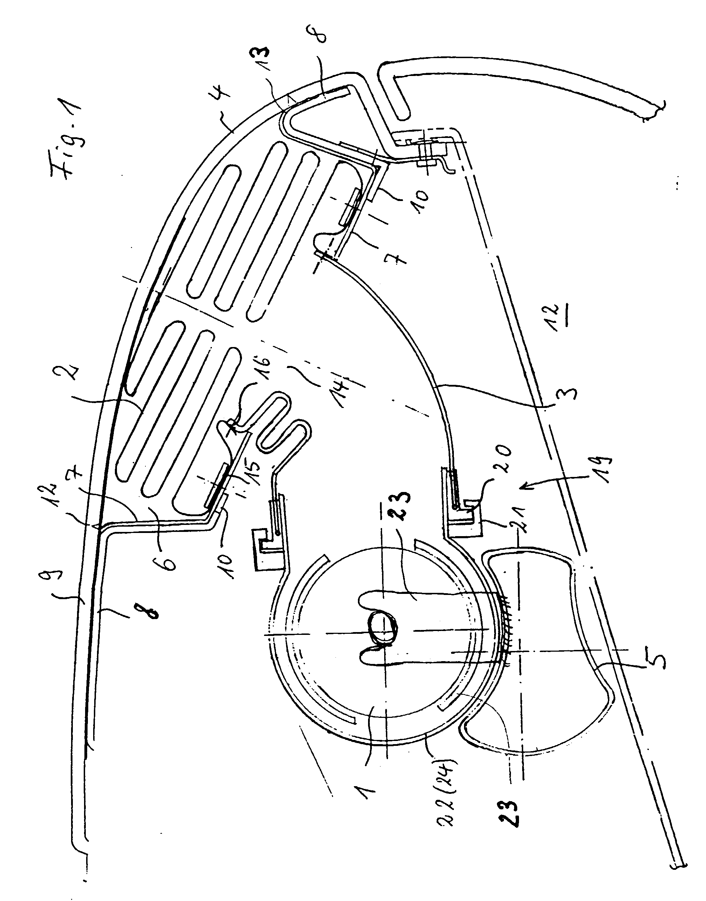

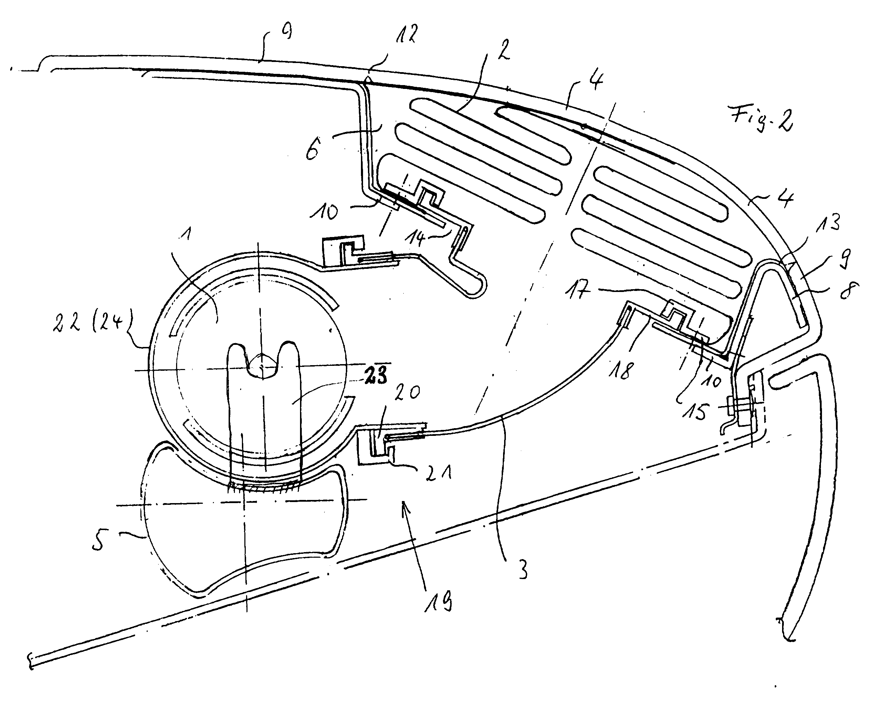

An der Innenseite des Teiles der Verstärkungshalbschale, welche zu dem Aufnahmefach 6 für das gefaltete Gaskissen 2 geformt ist, befindet sich eine flächige, mit Formschluß anliegende Verstärkung, bevorzugt aus Metall. Die Verstärkung ist wannenartig mit einer Öffnung am Wannenboden ausgestattet. Das gefaltete Gaskissen 2 wird von dieser Verstärkungswanne 7 aufgenommen. Die Verstärkungswanne 7 kann so ausgebildet sein, wie es in den Beispielen der Figuren 3 bis 6 dargestellt ist, bei welchen die Seitenwand der Verstärkungswanne 7 teilweise die Innenseite des Aufnahmefaches 8 bedeckt und das gefaltete Gaskissen 2 teilweise umfaßt. Die Verstärkungswanne kann jedoch in bevorzugter Weise so ausgebildet sein, wie es in den Ausführungsbeispielen der Figuren 1 und 2 dargestellt ist. Bei diesen Ausführungsbeispielen erstreckt sich die Verstärkungswanne 7 über die gesamte Innenwand des einstückig an die Verstärkungshalbschale 8 angeformten Aufnahmefaches 6. Ferner kann die Verstärkungswanne 7, wie in den Figuren 1 und 2 dargestellt ist, über eine an der Oberseite des Aufnahmefaches 6 gebildete Schulter 13 gelegt sein.

Das unten offene Aufnahmefach 6 besitzt eine umlaufende Abstützung 10, auf welcher die Verstärkungswanne 7 mit ihrem Boden aufliegt und abgestützt ist. Im Boden besitzt die Verstärkungswanne 7 eine Öffnung 14. Durch diese Öffnung 14 wird der Gaszutritt in das Innere des Gaskissens 2 beim Füllen vermittelt. Die Verstärkungswanne 7 bildet eine Armierung des einstückig an die Verstärkungshalbschale 8 angeformten Aufnahmefaches 6. Beim Füllen des Gaskissens 2 treten insbesondere in der Anfangsphase des Füllvorgangs Druckkräfte auf. In der Endphase des Füllvorgangs und am Ende des Füllvorgangs wirken entgegengesetzt gerichtete Zugkräfte. Aufgrund der großflächigen Abstützung der Verstärkungswanne 7 an der Innenseite des gegebenenfalls konisch geformten Aufnahmefaches 6 werden die Druckkräfte über die Verstärkungshalbschale 8 in den Fahrzeugaufbau geleitet.

Das Gaskissen ist ferner mit Hilfe eines aufgepreßten Befestigungsrahmens 15 druckdicht mit dem Boden der Verstärkungswanne 7 verbunden. Der Befestigungsrahmen 15 umfaßt die Öffnung 14 in der Verstärkungswanne 7. In den in den Figuren 1 und 2 dargestellten Ausführungsbeispielen erfolgt die gasdichte Verbindung mit der Gasführung 3 innerhalb des Befestigungsrahmens 15, welcher die die Öffnung 14 umfassende gasdichte Verbindung zwischen der Verstärkungswanne 7 und dem Gaskissen 2 herstellt.

Bei den Ausführungsbeispielen der Figuren 1 und 2 ist die Gasführung 3, welche die Verbindung zwischen der Gasauslaßseite des Gasgenerators, welche von Gasöffnungen 11 gebildet wird, und der Einlaßöffnung bzw. dem Innenraum des Gaskissens 2 herstellt, von einer fle-xiblen Gasführung 3 gebildet. Die flexible Gasführung 3 ist schlauchförmig ausgebildet und wird in bevorzugter Weise von einem textilen Gewebe, das mit einer gasdichten Innenbeschichtung versehen ist, oder einem Metallflexrohr gebildet. Das textile Gewebe der Gasführung 3 kann von der gleichen Art sein wie das Gaskissengewebe. Es eignet sich auch ein gasdicht beschichtetes schlauchförmiges Gewebe, wie es bei Feuerwehrschläuchen zur Anwendung kommt oder ein Metallflexrohr. Das Gewebe der Gasführung 3 ist mit dem Gewebe des Gaskissens 1 im Bereich einer oder mehrerer Nähte 16 verbunden (Fig. 1). Die Naht bzw. die Nähte 16 liegen innerhalb der gasdichten durch den Befestigungsrahmen 15 bewirkten Verbindung zwischen dem Boden der Verstärkungswanne 7 und dem Gaskissen 2.

Bei dem in der Fig. 2 dargestellten Ausführungsbeispiel ist an dem Befestigungsrahmen 15 ein Gegenstück 17 für einen mit dem Schlauch der Gasführung 3 verbundenen Bajonettverschluß 18 angeformt.

Bei beiden Ausführungsformen der Figuren 1 und 2 ist daher ein integraler Einbau des gefalteten Gaskissens 2 in dem einstückig an der Verstärkungsschale 8 gebildeten Aufnahmefach 6 möglich. Somit kann das gefaltete Gaskissen 2 in den aus Verstärkungshalbschale 8 und Instrumententafel 9 gebildeten Verbund integriert bzw. vormontiert werden. Bei dem in der Fig. 1 dargestellten Ausführungsbeispiel ist an das vormontierte und in den Verbund der Verstärkungshalbschale 8 und der Instrumententafel 9 integrierten Gaskissen 2 die schlauchförmige Gasführung 3 angenäht. Bei dem in der Fig. 2 dargestellten Ausführungsbeispiel kann der Anschluß des integrierten Gaskissens 2 über den Bajonettverschluß 18 in vormontiertem Zustand schon erfolgt sein oder nachträglich erfolgen. Die Verbindung des integrierten Gaskissens 2 über die Gasführung 3 mit der Gasauslaßseite des Gasgenerators 1 erfolgt in beiden Ausführungsbeispielen über einen nachträglich herstellbaren gasdichten Verschluß, welcher in bevorzugter Weise als Bajonettverschluß 19 ausgebildet sein kann. Der Bajonettverschluß 19 besteht aus einem mit dem Schlauchende der Gasführung 3 verbundenen Verschlußstück 20, das in eine Bajonettaufnahme 21 gasdicht eingesetzt ist. Die Bajonettaufnahme 21 ist mit einer Befestigungsschelle 22 fest verbunden. Über die Befestigungsschelle 22 wird der Gasgenerator 1 fest mit einer Querstrebe 5 (Querstrebe AA), welche zwischen den beiden A-Säulen des Fahrzeuges verläuft, verbunden. Hierzu kann die Schelle 22, zwischen welcher der Gasgenerator 1 gehalten wird, mit der Querstrebe AA 5 durch Schweißen oder anderweitig fest verbunden sein. Für eine formschlüssige Verbindung besitzt die Querstrebe 5 eine wannenartige Ausnehmung, in die die Schelle 22 mit dem Gasgenerator 1 eingesetzt ist. Zwischen der Schelle 22 und der Außenseite des Gasgenerators können ferner mit dem Fahrzeugaufbau fest verbundene Halterungen 23 vorgesehen sein. Der Gasgenerator kann z. B. durch Verschrauben mit den Halterungen 23 verbunden sein.

Der Gasgenerator kann jedoch auch an einer anderen Stelle des Fahrzeugaufbaus, beispielsweise mit der Spritzwand, fest verbunden sein. Durch die flexible Verbindung, welche mit der Gasführung 3 zwischen dem integrierten Gaskissen 2 und dem Gasgenrator 1 hergestellt werden kann, wird eine optimale Anordnung des Gasgenerators 1 an einer solchen Stelle ermöglicht, die genügend Platz für die kraftschlüssige Verbindung der mechanischen Gasgeneratorhalterung (Schelle 22 und oder Halterungen 23) mit dem Fahrzeugaufbau bietet. Insbesondere kann der Gasgenerator so angeordnet werden, daß der Raum für ein Handschuhfach 12 nicht beeinträchtigt wird.

Aufgrund der flexiblen Gestaltung der Gasführung 3, insbesondere in Form eines Schlauches, erzielt man ferner einen Toleranzausgleich zwischen den Befestigungsstellen, an denen das Gaskissen 2 und der Gasgenerator 1, angeordnet sind. In bevorzugter Weise ist der Gasgenerator 1 als Hybridgasgenerator ausgebildet, wie es insbesondere aus den Ausführungsbeispielen der Figuren 3 bis 6 zu erkennen ist. Durch die lösbare Verbindung, insbesondere in Form eines Bajonettverschlusses 19, zwischen der Gasauslaßseite des Gasgenerators 1 und der Gasführung 3 wird die Wartung des Gasgenerators, insbesondere der Austausch des Gasgenerators, innerhalb eines vorgeschriebenen Jahresturnus (ca. zehn bis zwölf Jahre) erleichtert. Es muß hierzu lediglich der Bajonettverschluß 19 gelöst werden, um einen einfachen Zugang zum Gasgenerator 1 zu erhalten. Aufgrund der festen Anbindung der Gasführung 3 an die Verstärkungswanne 7 und die Querstrebe 5 oder ein anderes Bauteil des Fahrzeugaufbaus wird mit Sicherheit gewährleistet, daß beim Füllen des Airbags auftretende überhöhte Zugkräfte vom Fahrzeugaufbau aufgenommen werden.

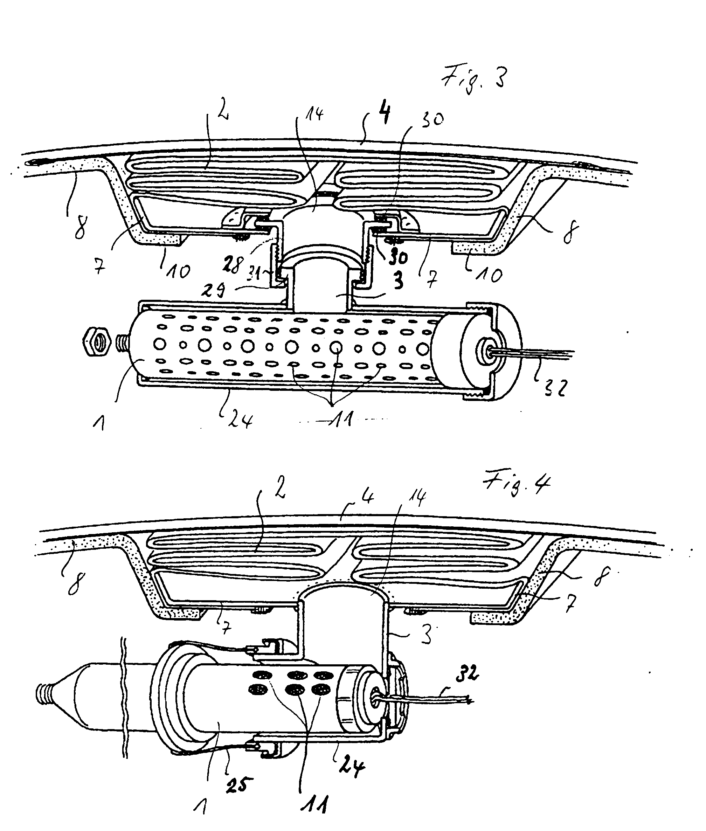

In den Figuren 3 bis 6 sind weitere Ausführungsbeispiele der Erfindung dargestellt. Bei diesen Ausführungsbeispielen besteht die Gasführung 3 zwischen dem Gasgenerator 1 und dem zu füllenden Gaskissen 2, welches in dem aus Verstärkungsschale 8 und Instrumententafel 9 bestehenden Verbund integriert ist, teilweise oder ganz aus einem festen Material, wobei toleranzausgleichende Mittel an geeigneten Verbindungsstellen vorgesehen sind. Der Gasgenerator 1 kann mit Hilfe einer Schraubverbindung ortsfest an einem geeigneten Teil des Fahrzeugaufbaus, z.B. die Querstrebe AA oder Spritzwand und dergl. befestigt sein. Die verwendeten Gasgeneratoren können so ausgebildet sein, daß um ihren Umfang verteilt Gasauslaßöffnungen 11 vorgesehen sind, welche die Gasauslaßseite des Gasgenerators 1 bilden. Ein Gasführungszylinder 24 umfaßt die Gasauslaßöffnungen 11 und ist mit der Gasführung 3 verbunden. Bei den Ausführungsformen der Figuren 4, 5 und 6 ist das obere Ende der Gasführung 3, beispielsweise durch Verschweißen, fest mit der Verstärkungswanne 7 verbunden. Auch die in den Figuren 1 und 2 gezeigte Schelle 22 kann als Gasführungszylinder ausgebildet sein. Bei dem in der Fig. 4 dargestellten Ausführungsbeispeil erfolgt die toleranzausgleichende Anbindung des Gasgenerators 1 an den mit der Gasführung 3 verbundenen Gasführungszylinder 24 über einen flexiblen Schlauch 25, der ebenfalls, wie der flexible Schlauch bei den Ausführungsbeispielen 1 und 2, aus einem textilen Gewebe bestehen kann, das an der Innenseite mit einer gasdichten Beschichtung versehen ist.

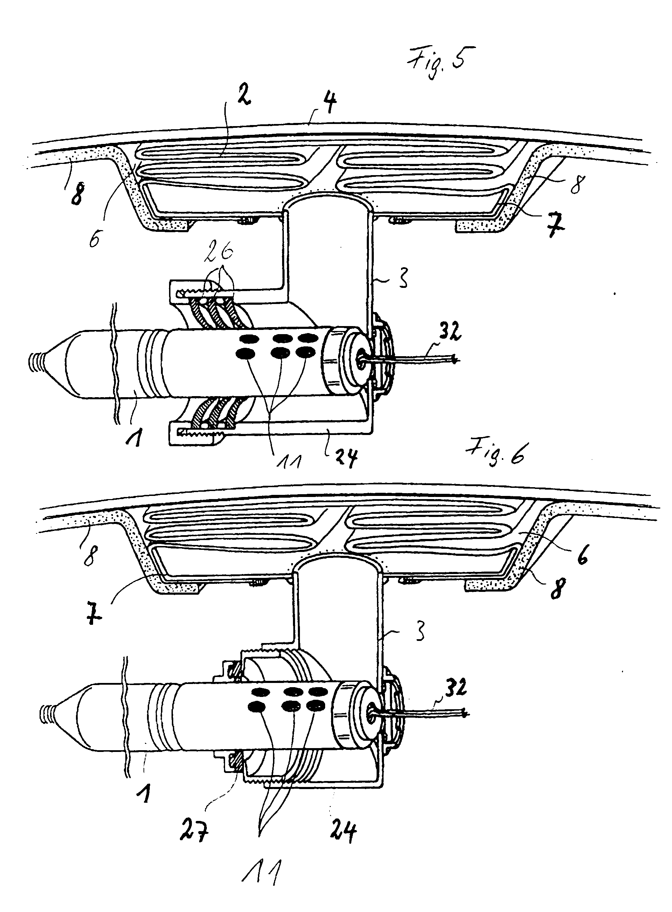

Beim Ausführungseispiel der Fig. 5 bestehen die gasdichten toleranzausgleichenden Mittel aus flexiblen Gummiblenden oder Blenden aus Ethylen-Propylen-Elastomeren insbesondere EP DM (Ethylen/Propylen-Dien-Terpolymer) - Blendmaterialien, welche die axiale Anbindung des an der ortsfesten Befestigungsstelle des Fahrzeugaufbaus vorgesehenen Gasgenerators gewährleisten. Beim Ausführungsbeispiel sind mehrere hintereinander geschaltete Gummiblenden 26 vorgesehen, die das formschlüssige und gasdichte Anbinden der Gasführung (Gasführungszylinder 24) an den ortsfest am Fahrzeugaufbau befestigten Gasgenerator 1 gewährleisten.

Bei dem in der Fig. 6 dargestellten Ausführungsbeispiel erfolgt die gasdichte toleranzausgleichende axiale Anbindung der Gasführung (Gasführungszylinder 24) an dem ortsfest am Fahrzeugbaufbau befestigten Gasgenerator 1 durch eine Schneidringabdichtung 27, die aus thermoplastischem Material bestehen kann. Beim Ausströmen von Füllgas aus den Gasauslaßöffnungen preßt sich die Schneidringabdichtung 27 in Druckbeaufschlagungsrichtung.

Während in den Ausführungsbeispielen der Figuren 4, 5 und 6 eine axiale Anbindung der Gasführung an den Gasgenerator 1 hergestellt wird, erfolgt beim Ausführungsbeispiel der Fig. 3 eine radiale Anbindung der Gasführung mit Hilfe von Gewindebuchsen 28 und 29. Die untere Gebindebuchse 29 kann mit dem Gasführungszylinder 24, beispielsweise durch Verschweißen, fest verbunden sein. Die obere Gewindebuchse 28 ist mit dem Boden der Verstärkungswanne 7 über Dichtringe 30, welche beim Ausführungsbeispiel als Wellendichtringe ausgebildet sind, verbunden. Die Dichtringe 30 bilden die toleranzausgleichende Verbindung des Gasgenerators 1, der fest am Gehäuseaufbau gelagert ist, zur Verstärkungswanne 7. Die beiden Gewindebuchsen 28 und 29 werden durch eine Überwurfmutter 31 miteinander verbunden. Ein zusätzlicher Toleranzausgleich wird bei dieser Ausführungsform durch die drehbare Anordnung des Gasgenerators 1 und die Verschiebemöglichkeit der Gasführung 3, welche von den Gewindebuchsen 28 und 29 sowie der Überwurfmutter 31 gebildet wird, gewährleistet.

Die bei den verschiedenen Ausführungsbeispielen verwendeten Gasgeneratoren 1 können als Hybridgasgeneratoren ausgebildet sein. In den Figuren 3 bis 6 sind zum Zünden der Gasgeneratoren elektrische Zündkabel 32 vorgesehen.

## Patentansprüche

1. Airbagvorrichtung, welche in einer Instrumentenfafel (9) unter einer Klappe (4) auf der Beifahrerseite eines Kraftfahrzeugs einbaubar, mit einer Gasquelle (1) für ein Füllgas und einem Gaskissen (2), welches sich beim Füllen mit dem Füllgas in den Fahrzeuginnenraum an der Beifahrerseite durch eine Öffnung in der Instrumententafel, die im Ruhezustand von der Klappe abgedeckt ist, entfaltet, wobei das Gaskissen und die Gasquelle an separaten Stellen am Fahrzeug befestigbar sind und über eine Gasführung (3) für das Füllgas miteinander verbunden sind, wobei das Gaskissen (2) im gefalteten Zustand in einem unter der Klappe (4) liegenden Aufnahmefach (6) eines aus der Instrumententafel (9) und einer Verstärkungshalbschale (8) bestehenden Verbundes angeordnet ist, und wobei die Gasquelle (1) an einem fest mit dem Fahrzeugaufbau verbundenen Bauteil (5) abgestützt ist, dadurch gekennzeichnet, daß das Aufnahmefach (6) an seiner Innenseite mit einer Verstärkungswanne (7) ausgestattet ist, die entlang einer ringförmigen Verbindung (16) gasdicht mit dem Gaskissen (2) verbunden ist, daß die ringförmige gasdichte Verbindung (16) zwischen der Verstärkungswanne (7) und dem Gaskissen (2) die Gaseinlaßöffnung (14) des Gaskissens (2), welche mit der Gasführung (3) verbunden ist, umfaßt.

2. Airbagvorrichtung nach Anspruch 1, dadurch gekennzeichnet, daß die Gasführung (3, 24) toleranzausgleichend ausgebildet ist.

3. Airbagvorrichtung nach Anspruch 1 oder 2, dadurch gekennzeichnet, daß die Gasführung (3, 24) die Gasaustrittsöffnungen (11) des Gasgenerators (1) und die Gaseinlaßöffnung des Gaskissens (2) gasdicht miteinander verbindet.

4. Airbagvorrichtung nach einem der Ansprüche 1 bis 3, dadurch gekennzeichnet, daß der Gasgenerator (1) an der zwischen den beiden A-Säulen des Fahrzeugs verlaufenden Querstrebe (5) befestigt ist.

5. Airbagvorrichtung nach Anspruch 4, dadurch gekennzeichnet, daß der Gasgenerator (1) an der Oberseite der Querstrebe (5) angeordnet ist.

6. Airbagvorrichtung nach Anspruch 4 oder 5, dadurch gekennzeichnet, daß der Gasgenerator (1) mit Formschluß an der Querstrebe (5) befestigt ist.

7. Airbagvorrichtung nach einem der Ansprüche 1 bis 6, dadurch gekennzeichnet, daß die Gasführung (3) insbesondere an der Verbindung mit der Gasauslaßseite des Gasgenerators (1) lösbar ist.

8. Airbagvorrichtung nach einem der Ansprüche 1 bis 7, dadurch gekennzeichnet, daß das Aufnahmefach (6) durch eine einstückige Anformung an die einen Verbund mit der Instrumententafel (9) bildende Verstärkungshalbschale (8) gebildet ist.

9. Airbagvorrichtung nach Anspruch 9, dadurch gekennzeichnet, daß das Aufnahmefach (6) als Schußkanal zur Führung des Gaskissens (2) beim Entfalten ausgebildet ist.

10. Airbagvorrichtung nach einem der Ansprüche 1 bis 9, dadurch gekennzeichnet, daß bei der Entfaltung wirksame Druck- und/oder Zugkräfte durch die Verstärkungswanne (7) aufnehmbar sind und über die Verstärkungshalbschale (8) und/oder die Gasführung (3) in den Fahrzeugaufbau leitbar sind.

11. Airbagvorrichtung nach einem der Ansprüche 1 bis 10, dadurch gekennzeichnet, daß das Aufnahmefach (6) eine Abstützung (10) für die Verstärkungswanne (7) im Bereich des Bodens der Verstärkungswanne aufweist.

12. Airbagvorrichtung nach einem der Ansprüche 1 bis 11, dadurch gekennzeichnet, daß die Gasführung (3) mit der Verstärkungswanne (7) gasdicht verbunden ist.

13. Airbagvorrichtung nach einem der Ansprüche 1 bis 12, dadurch gekennzeichnet, daß die Gasführung (3) die Gasauslaßseite des Gasgenerator (1) gasdicht umfaßt.

14. Airbagvorrichtung nach einem der Ansprüche 1 bis 13, dadurch gekennzeichnet, daß toleranzausgleichende Mittel (3; 25; 26; 28 - 31) zwischen der Verstärkungswanne (7) und dem Gasgenerator (1) vorgesehen sind.

15. Airbagvorrichtung nach einem der Ansprüche 1 bis 14, dadurch gekennzeichnet, daß die Gasführung (3) für den Toleranzausgleich flexibel ausgebildet ist.

16. Airbagvorrichtung nach einem der Ansprüche 1 bis 15, dadurch gekennzeichnet, daß die Gasführung (3) als Schlauch, insbesondere Metallflexrohr ausgebildet ist.

17. Airbagvorrichtung nach Anspruch 16, dadurch gekennzeichnet, daß der Schlauch der Gasführung (3) aus textilem Gewebe besteht und an seiner Innenwand eine gasdichte Beschichtung aufweist.

18. Airbagvorrichtung nach Anspruch (17), dadurch gekennzeichnet, daß der Schlauch der Gasführung (3) mit dem Gaskissen (2) vernäht (16) ist.

19. Airbagvorrichtung nach Anspruch (16), dadurch gekennzeichnet, daß die als Metallflexrohr ausgebildete Gasführung (3) mit dem Gaskissen (2) verbunden ist.

## Claims

1. Airbag device, which can be installed in an instrument panel (9) below a flap (4) on the passenger side of a motor vehicle, having a gas source (1) for a filling gas and a gas cushion (2) which, when filled with the filling gas, unfolds into the vehicle interior on the passenger side through an opening in the instrument panel which, in the state of rest, is covered by the flap, the gas cushion and the gas source being attachable to the vehicle at separate places and being connected to one another by means of a gas conduit (3) for the filling gas, in the folded state, the gas cushion (2) being arranged in a holding compartment (6), located directly below the flap (4), of a unit comprising the instrument panel (9) and a reinforcing semi-shell (8), and the gas source (1) being supported on a component (5) which is fixedly connected to the vehicle body, characterized in that the holding compartment (6) is fitted, on its inside, with a reinforcing trough (7) which is connected to the gas cushion (2) in a gas-tight manner along an annular connection (16), and in that the annular gas-tight connection (16) between the reinforcing trough (7) and the gas cushion (2) surrounds the gas inlet opening (14) of the gas cushion (2) which is connected to the gas conduit (3).

2. Airbag device according to Claim 1, characterized in that, the gas conduit (3,24) is designed to compensate tolerances.

3. Airbag device according to Claim 1 or 2, characterized in that the gas conduit (3,24) connects the gas outlet openings (11) of the gas generator (1) and the gas inlet opening of the gas cushion (2) to one another in a gas-tight manner.

4. Airbag device according to one of Claims 1 to 3, characterized in that the gas generator (1) is attached to the cross-strut (5) which extends between the two A-pillars of the vehicle.

5. Airbag device according to Claim 4, characterized in that the gas generator (1) is arranged on the top side of the cross-strut (5).

6. Airbag device according to Claim 4 or 5, characterized in that the gas generator (1) is attached to the cross-strut (5) with a positive-locking connection.

7. Airbag device according to one Claims 1 to 6, characterized in that the gas conduit (3) can be detached, in particular at the connection to the gas outlet side of the gas generator (1).

8. Airbag device according to one of Claims 1 to 7, characterized in that, the holding compartment (6) is formed by a one-piece moulding onto the reinforcing semi-shell (8) which forms a unit with the instrument panel (9).

9. Airbag device according to Claim 9, characterized in that the holding compartment (6) is designed as a chute to guide the gas cushion (2) when it unfolds.

10. Airbag device according to one of Claims 1 to 9, characterized in that compressive and/or tensile forces, which act during the unfolding process, can be absorbed by the reinforcing trough (7) and can be transmitted via the reinforcing semi-shell (8) and/or the gas conduit (3) to the vehicle body.

11. Airbag device according to one of Claims 1 to 10, characterized in that the holding compartment (6) has a support (10) for the reinforcing trough (7) in the region of the bottom of the reinforcing trough.

12. Airbag device according to one of Claims 1 to 11, characterized in that the gas conduit (3) is connected to the reinforcing trough (7) in a gas-tight manner.

13. Airbag device according to one of Claims 1 to 12, characterized in that the gas conduit (3) surrounds the gas outlet side of the gas generator (1) in a gas-tight manner.

14. Airbag device according to one of Claims 1 to 13, characterized in that tolerance-compensating means (3; 25; 26; 28-31) are provided between the reinforcing trough (7) and the gas generator (1).

15. Airbag device according to one of Claims 1 to 14, characterized in that the gas conduit (3) is designed to be flexible for tolerance compensation.

16. Airbag device according to one of Claims 1 to 15, characterized in that the gas conduit (3) is designed as a hose, in particular a flexible metal tube.

17. Airbag device according to Claim 16, characterized in that the hose of the gas conduit (3) consists of a textile fabric and has a gas-tight coating on its inside wall.

18. Airbag device according to Claim 17, characterized in that the hose of the gas conduit (3) is sewn (16) to the gas cushion (2).

19. Airbag device according to Claim 16, characterized in that the gas conduit (3) designed as a flexible metal tube is connected to the gas cushion (2).

## Revendications

1. Dispositif de coussin gonflable, lequel peut être incorporé à un tableau de bord (9) sous un couvercle (4) du côté passager d'un véhicule automobile, comprenant une source de gaz (1) pour un gaz de remplissage et un coussin de gaz (2), qui se déploie par remplissage avec le gaz de remplissage dans l'espace intérieur du véhicule du côté passager à travers une ouverture du tableau de bord, qui est recouverte par le couvercle à l'état de repos, le coussin de gaz et la source de gaz pouvant être fixés à des endroits séparés du véhicule et étant raccordés l'un à l'autre par l'entremise d'une conduite de gaz (3) pour le gaz de remplissage, le coussin de gaz (2) étant agencé à l'état plié dans un logement récepteur (6), situé sous le couvercle (4), d'une structure composite constituée du tableau de bord (9) et d'une demi-coque de renfort (8) et la source de gaz (1) s'appuyant sur un composant (5) solidement relié à la structure du véhicule, caractérisé en ce que le logement récepteur (6) est équipé, sur son côté intérieur, d'un auget de renfort (7) qui est relié de manière étanche aux gaz du coussin de gaz (2) le long d'une liaison annulaire (16), en ce que la liaison annulaire étanche aux gaz (16) entoure, entre l'auget de renfort (7) et le coussin de gaz (2), l'ouverture d'admission de gaz (14) du coussin de gaz (2), qui est reliée à la conduite de gaz (3).

2. Dispositif de coussin gonflable selon la revendication 1, caractérisé en ce que la conduite de gaz (3, 24) est conformée de manière à compenser les tolérances.

3. Dispositif de coussin gonflable selon la revendication 1 ou 2, caractérisé en ce que la conduite de gaz (3, 24) relie les unes aux autres de manière étanche aux gaz les ouvertures de sortie de gaz (11) du générateur de gaz (1) et l'ouverture d'admission de gaz du coussin de gaz (2).

4. Dispositif de coussin gonflable selon l'une quelconque des revendications 1 à 3, caractérisé en ce que le générateur de gaz (1) est fixé au renfort transversal (5) s'étendant entre les deux montants A du véhicule.

5. Dispositif de coussin gonflable selon la revendication 4, caractérisé en ce que le générateur de gaz (1) est agencé sur la partie supérieure du renfort transversal (5).

6. Dispositif de coussin gonflable selon la revendication 4 ou 5, caractérisé en ce que le générateur de gaz (1) est fixé sur le renfort transversal (5) avec adaptation de formes.

7. Dispositif de coussin gonflable selon l'une quelconque des revendications 1 à 6, caractérisé en ce que la conduite de gaz (3) peut être détachée en particulier de la liaison avec le côté de sortie de gaz du générateur de gaz (1).

8. Dispositif de coussin gonflable selon l'une quelconque des revendications 1 à 7, caractérisé en ce que le logement récepteur (6) est formé par un moulage d'une seule pièce sur la demi-coque de renfort (8) formant une structure composite avec le tableau de bord (9).

9. Dispositif de coussin gonflable selon la revendication 9, caractérisé en ce que le logement récepteur (6) se présente sous la forme d'un canal de décharge pour guider le coussin de gaz (2) lors de son déploiement.

10. Dispositif de coussin gonflable selon l'une quelconque des revendications 1 à 9, caractérisé en ce que les forces de compression et/ou de traction apparaissant lors du déploiement peuvent être absorbées par l'auget de renfort (7) et peuvent être transférées dans la structure du véhicule par l'entremise de la demi-coque de renfort (8) et/ou de la conduite de gaz (3).

11. Dispositif de coussin gonflable selon l'une quelconque des revendications 1 à 10, caractérisé en ce que le logement récepteur (6) présente un appui (10) pour l'auget de renfort (7) dans la zone du fond de l'auget de renfort.

12. Dispositif de coussin gonflable selon l'une quelconque des revendications 1 à 11, caractérisé en ce que la conduite de gaz (3) est reliée à l'auget de renfort (7) de manière étanche aux gaz.

13. Dispositif de coussin gonflable selon l'une quelconque des revendications 1 à 12, caractérisé en ce que la conduite de gaz (3) entoure le côté de sortie de gaz du générateur de gaz (1) de manière étanche aux gaz.

14. Dispositif de coussin gonflable selon l'une quelconque des revendications 1 à 13, caractérisé en ce qu'il est prévu des moyens de compensation de tolérances (3; 25; 26; 28-31) entre l'auget de renfort (7) et le générateur de gaz (1).

15. Dispositif de coussin gonflable selon l'une quelconque des revendications 1 à 14, caractérisé en ce que la conduite de gaz (3) se présente sous une forme flexible pour la compensation des tolérances.

16. Dispositif de coussin gonflable selon l'une quelconque des revendications 1 à 15, caractérisé en ce que la conduite de gaz (3) se présente sous la forme d'un tuyau, en particulier d'un tuyau métallique flexible.

17. Dispositif de coussin gonflable selon la revendication 16, caractérisé en ce que le tuyau de la conduite de gaz (3) est constitué d'un tissu textile et présente un revêtement étanche aux gaz sur sa paroi interne.

18. Dispositif de coussin gonflable selon la revendication 17, caractérisé en ce que le tuyau de la conduite de gaz (3) est cousu sur le coussin de gaz (2).

19. Dispositif de coussin gonflable selon la revendication 16, caractérisé en ce que la conduite de gaz (3) façonnée en tant que tuyau métallique flexible est reliée au coussin de gaz (2).
